# EUROPÄISCHE PATENTSCHRIFT

(11) **EP 1 849 203 B1**
(45) Veröffentlichungstag und Bekanntmachung des Hinweises auf die Patenterteilung: **11.11.2009**
(21) Anmeldenummer: 06722476.6
(22) Anmeldetag: 11.02.2006
(51) Int. Cl.: H01M 8/04

(54) **VERFAHREN ZUM BETREIBEN VON BRENNSTOFFZELLEN FÜR BEGRENZT WÄRMEBELASTBARE SYSTEME UND BRENNSTOFFZELLENSTACK ZUR DURCHFÜHRUNG DES VERFAHRENS**
METHOD FOR OPERATING FUEL CELLS FOR SYSTEMS THAT ARE RESTRICTED BY EXPOSURE TO THERMAL STRESS AND FUEL CELL STACK FOR CARRYING OUT SAID METHOD
PROCEDE POUR UTILISER DES PILES A COMBUSTIBLE DANS DES SYSTEMES A CHARGE THERMIQUE LIMITEE ET EMPILEMENT DE PILES A COMBUSTIBLE PERMETTANT DE METTRE EN OEUVRE LE PROCEDE

(30) Priorität: 14.02.2005 DE 102005007180
(43) Veröffentlichungstag der Anmeldung: 31.10.2007
(73) Patentinhaber: ZAE Bayern Bayerisches Zentrum für angewandte Energieforschung e.V., 85748 Garching (DE)
(72) Erfinder: CREMERS, Carsten, 86327 Pfinztal (DE); SCHÖLKOPF, Wolfgang, 80805 München (DE); STIMMING, Ulrich, 81479 München (DE)
(74) Vertreter: Wablat, Wolfgang
(86) Internationale Anmeldenummer: PCT/DE2006/000254
(87) Internationale Veröffentlichungsnummer: WO 2006/086954

(56) Entgegenhaltungen:
- US-A- 5 750 278
- US-A1- 2003 054 209

## Beschreibung

Die Erfindung betrifft ein Verfahren zum Betreiben von Brennstoffzellen für begrenzt wärmebelastbare Systeme mit berührbaren Flächen und/oder wärmeempfindlichen Bauteilen, insbesondere eines mit Luft und Brennstoff betriebenen Brennstoffzellenstacks. Die Erfindung bezieht sich darüber hinaus auf zur Durchführung des Verfahrens ausgeführte Brennstoffzellen oder Brennstoffzellenstack mit kathodenseitig zugeordneter Luftquelle und anodenseitig vorgeschalteter Brennstoffquelle.

In einer Brennstoffzelle reagiert in einer kontrollierten Verbrennung bekanntermaßen ein Brennstoff mit Sauerstoff unter Bildung von Wasser. Dabei wird auf vorteilhafte Art, das heißt mit hohem Wirkungsgrad und geringer Schadstoffemission, elektrische Energie erzeugt und einem Verbraucher zugeführt. Als Brennstoff werden unter anderem Alkohole, Kohlenwasserstoffe, Wasserstoff, Esther oder Äther verwendet. Die kathodenseitig erforderliche Sauerstoffversorgung erfolgt beispielsweise durch Zuführung von Umgebungsluft, während an der Anode Wasserstoff entweder unmittelbar oder - wie beispielsweise bei der Direktmethanol-Brennstoffzelle durch Zuführung von Methanol - indirekt bereitgestellt wird. Die elektrochemische Reaktion an der Anode besteht bei der Direktmethanol-Brennstoffzelle in der Umsetzung von Methanol und Wasser zu CO₂, H+ und e-. Die Wasserstoffionen wandern durch den Elektrolyt zur Kathode, während die freien Elektronen an den elektrischen Leiter abgegeben werden. Der Sauerstoff an der Kathode reagiert mit den Wasserstoffionen und unter Aufnahme von Elektronen, so dass als Reaktionsprodukt Wasser entsteht.

In jeder Brennstoffzelle ist es notwendig, die Anode und die Kathode derart voneinander zutrennen, dass der an der Anodenseite zugeführte Brennstoff nicht zur Kathodenseite gelangt und dort oxidiert wird, andererseits aber der Protonenaustausch gewährleistet ist. Hierzu wird üblicherweise eine Polymerelektrolytmembran verwendet, die beispielsweise aus einem unter dem Markennamen Nafion® bekannten Material besteht und die auf der Anodenseite und der Kathodenseite mit einem Elektrodenmaterial zur Ausbildung der Anode und der Kathode beschichtet ist. Darüber hinaus ist die so gebildete Membran-Elektroden-Einheit auf beiden Seiten mit einem Katalysatormaterial aus einem Edelmetall (Platin, Ruthenium) belegt. Die Membran-Elektroden-Einheit ist zwischen zwei mit Fluidverteilerstrukturen versehenen elektrisch leitenden Bipolarplatten angeordnet, die sowohl der Zu- und Abführung der Reaktionsedukte und Reaktionsprodukte als auch der elektrischen Kontaktierung und Ableitung des elektrischen Stroms zwischen Anode und Kathode zu den Stromverbrauchern des betreffenden Gerätes dienen. Um die elektrische Energie zum Betreiben des betreffenden Geräts in der erforderlichen Höhe bereitstellen zu können, wird eine Mehrzahl der zuvor beschriebenen Brennstoffzellen zu einem Brennstoffzellenstapel oder -stack zusammengefasst, der durch an beiden Seiten des Stapels vorgesehene Endplatten abdichtend zusammengehalten wird. Unter dem Ausdruck Brennstoffzelle ist im Folgenden immer auch ein Brennstoffzellenstack zu verstehen, der hier der Einfachheit halber auch nur als Stack bezeichnet wird.

Unter dem Aspekt der Energieversorgung von begrenzt wärmebelastbaren Systemen, beispielsweise von tragbaren elektronischen Geräten, sind die bekannten Brennstoffzellen der oben beschriebenen Art insofern nachteilig, als zur Bereitstellung der notwendigen elektrischen Leistung große aktive Flächen (Elektrodenflächen) erforderlich sind. Dadurch sind wegen des für die Membran-Elektroden-Einheiten verwendeten teueren Materials (Nafion, Edelmetall) zum einen die Kosten und darüber hinaus auch der Platzbedarf und das Gewicht hoch. Andererseits ist aber bei Geräten mit berührbaren Oberflächen und bei elektronischen Geräten die Betriebstemperatur der Brennstoffzelle, die in einem erhöhten Temperaturbereich, das heißt zwischen 30°C und 110°C, bekanntermaßen eine Erhöhung der Leistungsdichte (W/cm2) der Brennstoffzelle zur Folge hat, begrenzt, da der Stack als in der Regel heißestes Bauteil derartiger Systeme wegen der möglichen Berührung und der begrenzten Wärmebelastbarkeit bestimmter Bauteile eine Oberflächentemperatur von 50°C zumeist nicht überschreiten darf. Prinzipiell bezieht sich die vorliegende Erfindung auf Brennstoffzellen mit einer der angestrebten hohen Leistung entsprechenden hohen Betriebstemperatur, wobei jedoch die zulässige Außentemperatur der Brennstoffzelle aufgrund einer eingeschränkten Wärmebelastbarkeit des Systems, in dem die Brennstoffzelle eingesetzt wird, begrenzt ist.

Der Erfindung liegt die Aufgabe zugrunde, ein Verfahren zum Betreiben einer Brennstoffzelle anzugeben und einen zur Durchführung des Verfahrens ausgeführten Brennstoffzellenstack so auszubilden, dass bei hoher elektrischer Leistung die zulässige Wärmebelastung der Umgebung nicht überschritten wird und das Stackvolumen und -gewicht und letztlich die Herstellungskosten minimiert werden.

Erfindungsgemäß wird die Aufgabe mit einem Verfahren gemäß den Merkmalen des Patentanspruchs 1 sowie mit einem gemäß den Merkmalen des Patentanspruchs 9 ausgebildeten Brennstoffzellenstack gelöst. Weitere Merkmale und Vorteilhafte Weiterbildungen der Erfindung ergeben sich aus den Unteransprüchen.

Der sich aus den Ansprüchen 1 und 9 ergebende Grundgedanke der Erfindung besteht mit anderen Worten darin, dass die Brennstoffzelle mit einer zur Erzielung der gewünschten Leistung hohen - optimalen - vorzugsweise zwischen 60 und 110°C liegenden Arbeitstemperatur, aber nach außen wärmeisoliert betrieben wird und die infolge der hohen Arbeitstemperatur und der Wärmeisolierung anfallende Wärme mit Hilfe eines von der zugeführten Reaktionsluft abgezweigten Teils aus der heißen Kathodenabluft abgeführt wird. Mit einer derartigen bzw. derart betriebenen Brennstoffzelle kann eine deutliche Leistungssteigerung erzielt werden, ohne dass die maximal zulässige Außentemperatur der Brennstoffzelle überschritten bzw. das von dieser versorgte System thermisch überbelastet wird. Überraschenderweise wurde zudem festgestellt, dass mit einer nach diesem Verfahren betriebenen und ausgebildeten Brennstoffzelle mit den bekannten Systemen bei gleicher Wärmeabstrahlung und Leistung von einer Reduzierung des Stackgewichts und -volumens sowie der Materialkosten um etwa 75% auszugehen ist. Das heißt mit anderen Worten, dass bei gleich bleibendem Gewicht, Volumen und Kostenaufwand sowie einer noch zulässigen Erwärmung bzw. Wärmeabgabe im Vergleich mit den bisher bekannten Lösungen wesentlich höhere Leistungen erzielt werden können.

In Ausgestaltung der Erfindung erfolgt die Wärmeisolierung mit einer den Brennstoffzellenstack ummantelnden Vakuumisolierschicht. Darüber hinaus ist der Stack von einem Gehäuse umgeben, dem auf einer Seite - als überschüssiger Teil der Arbeitsluft - Kühlluft zugeführt wird, die in einem Ringspalt zwischen Gehäuse und Vakuumisolierung zur gegenüberliegenden Gehäuseseite geleitet wird. Dadurch wird das Gehäuse und ein Teil der durch die hohe Arbeitstemperatur und die Wärmeisolierung bedingten Wärme von der Brennstoffzelle abgeführt sowie zusätzlich auch die heiße, feuchte Kathodenabluft gekühlt. Zur Erzielung der hohen Arbeitstemperaturen, die insbesondere in der Anlaufphase der Brennstoffzelle in kurzer Zeit erreicht werden sollen, wird der anodenseitig im Vorlauf zugeführte Brennstoff im Wärmeaustausch mit dem im Rücklauf abgeführten heißen Reaktionsprodukten vorgewärmt.

In weiterer Ausgestaltung der Erfindung wird zum Wärmeaustausch zwischen Vor- und Rücklauf ein Latentwärmespeichermaterial verwendet, dessen Schmelztemperatur geringfügig unterhalb der jeweiligen Arbeitstemperatur der Brennstoffzelle liegt. Der Latentwärmespeicher kann auch in den Brennstoffzellenstack integriert sein.

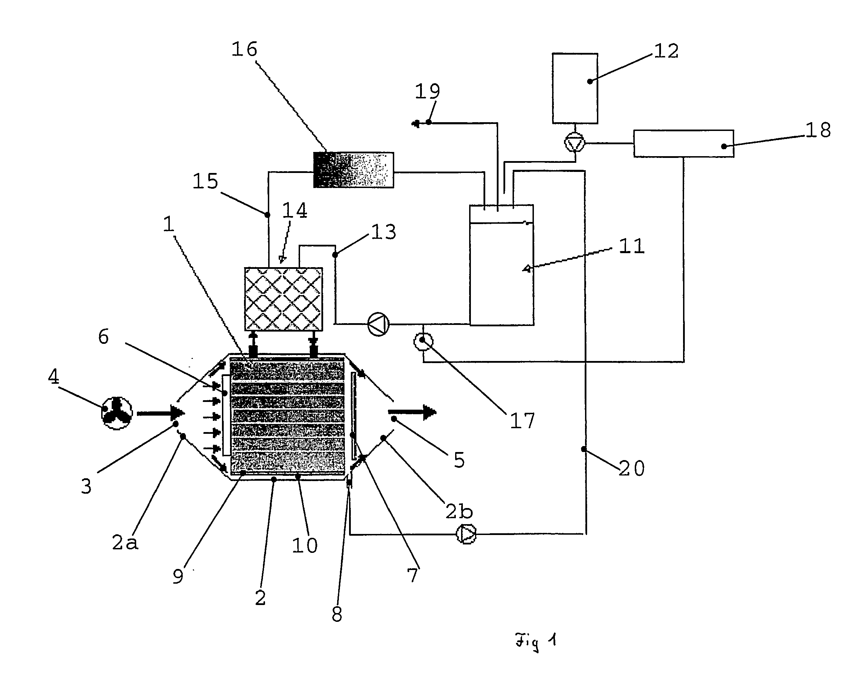

Ein Ausführungsbeispiel der Erfindung wird anhand der Zeichnung, in deren einziger Figur ein Prozessschema für den Betrieb einer erfindungsgemäß ausgebildeten Direktmethanol-Brennstoffzelle dargestellt ist, näher erläutert.

Der Direktmethanol-Brennstoffzellenstack 1 umfasst eine Mehrzahl im Wechsel angeordneter Membran-Elektroden-Einheiten und Bipolarplatten, die zwischen Endplatten (jeweils nicht dargestellt) zusammengepresst gehalten sind. Der Stack ist von einem Gehäuse 2 umgeben, das im Lufteintrittsteil 2a eine Zuluftöffnung 3 mit vorgeschaltetem Lüfter 4 zur Zuführung von Frischluft zur Kathodenseite der einzelnen Brennstoffzellen und in dem auf der gegenüberliegenden Seite liegenden Luftaustrittsteil 2b eine Abluftöffnung 5 zum Abführen von warmer, feuchter Kathodenabluft aufweist. Im Lufteintrittsteil 2a des Gehäuses 2 ist dem Brennstoffzellenstack 1 ein Luftverteiler 6 aus einem plattenförmigen Sinter- oder Fließmaterial zur gleichmäßig verteilten Luftzufuhr zur Kathodenseite der einzelnen Brennstoffzellen vorgeschaltet. An der gegenüberliegenden Luftaustrittsseite des Brennstoffzellenstacks 1 ist innerhalb des Luftaustrittsteils 2b des Gehäuses 2 ein - hier plattenförmiger - Abluftkühler 7 zum Abkühlen und Entfeuchten der aus dem Brennstoffzellenstack 1 austretenden heißen, feuchten Kathodenabluft angeordnet. In dem Luftaustrittsteil 2b ist außerdem eine Kondenswasserablauföffnung 8 vorgesehen. Der Brennstoffzellenstack 1 ist am Außenumfang mit einer Wärmeisolierschicht 9 ummantelt, die aus einem Vakuumisoliermaterial mit hoher Isolierwirkung und dementsprechend geringer Schichtdicke besteht. Das Gehäuse 2 umgibt den Brennstoffzellenstacks 1 am Umfang in geringem Abstand zur Wärmeisolierschicht 9, so dass zwischen dieser und der Innenumfangsfläche des Gehäuses 2 ein enger Ringspalt 10 gebildet ist, der den Lufteintrittsteil 2a des Gehäuses 2 mit dessen Luftaustrittsteil 2b verbindet.

Die Brennstoffzufuhr zur Anodenseite der Brennstoffzellen erfolgt aus einem Brennstoff-Wasser-Behälter 11, der aus einem - hier mit Methanol gefüllten - Brennstofftank 12 beschickt wird. Das Methanol-Wasser-Gemisch wird über eine Vorlaufleitung 13 und einen - auf der Basis eines hier aus Paraffin bestehenden Latentwärmespeichermaterials arbeitenden - Wärmetauscher 14 in den Brennstoffzellenstack 1 geleitet, während die abgereicherte Methanollösung über eine Rücklaufleitung 15, in die der Wärmetauscher 14 und ein Rückkühler 16 eingebunden sind, zurück in den Brennstoff-Wasser-Behälter 11 geleitet wird. In der Vorlaufleitung 13 befindet sich ein Brennstoffsensor 17, der mit einer Steuerung 18 für die Brennstoffzufuhr verbunden ist. In dem Brennstoff-Wasser-Behälter 11 befindet sich ein Gas-Auslassventil 19 zur Entfernen des im Brennstoffzellenprozess gebildeten CO₂. Außerdem ist der Brennstoff-Wasser-Behälter 11 über eine Rohrleitung 20 mit der Kondenswasserablauföffnung 8 verbunden.

In dem vorliegenden Ausführungsbeispiel wird der Brennstoffzellenstack 1 zur Erzielung einer hohen Leistungsdichte mit einer Temperatur von 90°C betrieben. Mit Hilfe des Wärmetauschers 14 in der Vorlaufleitung 13 wird das dem Brennstoffzellenstack 1 zugeführte Methanol-Wasser-Gemisch vorgewärmt. Das Speichermaterial des als Latentwärmespeicher ausgebildeten Wärmetauschers hat einen geringfügig unterhalb der Betriebstemperatur des Brennstoffzellenstacks liegenden Schmelzpunkt. Insbesondere bei der Inbetriebnahme des Brennstoffzellenstacks 1 gewährleistet die mit dem Latentwärmespeichermaterial mögliche Aufheizung des Brennstoffs ein schnelles Erreichen der Betriebstemperatur und damit ein schnelles Starten des Stromerzeugungsprozesses. Mit Hilfe des Lüfters 4 wird Luft in das Lufteintrittsteil 2a eingebracht und über den Luftverteiler 6 zur Kathode der Brennstoffzellen des Brennstoffzellenstacks 1 geleitet. Ein großer Teil der zugeführten Luft wird jedoch zur Kühlung der über den Ringspalt 10 in den Luftaustrittsteil 2b des Gehäuses 2 geleitet, um die aus dem Brennstoffzellenstack 1 austretende und infolge der hohen Betriebstemperatur entsprechend heiße Kathodenabluft zu kühlen. Die warme, feuchte Kathodenabluft trifft auf den mit der Kühlluft gekühlten Abluftkühler 7 und wird gekühlt. Das gleichzeitig am Abluftkühler 7 auskondensierende Wasser gelangt über die Kondenswasserablauföffnung 8 und die Rohrleitung 20 in den Brennstoff-Wasser-Behälter 11. Insbesondere die am Umfang des Brennstoffzellenstacks 1 vorgesehene Wärmeisolierschicht 9 begrenzt die aufgrund der hohen Betriebstemperatur zu erwartende Oberflächentemperatur und die abgestrahlte Wärme auf einen für Bauteile mit berührbaren Oberflächen und elektronischen Elementen zulässigen Wert. Eine zusätzliche Kühlung bewirkt die durch den Ringspalt 10 geführte Luft. Die mit der erhöhten Betriebstemperatur austretende abgereicherte Methanollösung wird über den Wärmetauscher 14 und anschließend über den Rückkühler 16 geleitet und dabei auf eine Temperatur unterhalb 50°C abgekühlt und gelangt danach in den Brennstoff-Wasser-Behälter 11.

Aufgrund der mit dem zuvor beschriebenen Stack möglichen hohen Betriebstemperatur (im vorliegenden Ausführungsbeispiel 90°C) kann die Leistungsdichte (W/cm2) der Brennstoffzelle wesentlich erhöht bzw. die aktive Fläche und damit das Stackvolumen und -gewicht gegenüber einem mit geringerer Temperatur betriebenen, nicht isolierten und nicht gekühlten Stack mit gleicher Leistung wesentlich reduziert werden. Bei dem oben beschriebenen Stack mit einer Leistung von 50 W, einer Arbeitstemperatur von 90°C und einer aufgrund der erfindungsgemäßen Isolierung und Kühlung 50°C nicht überschreitenden Oberflächentemperatur können gegenüber einem bekannten Stack mit gleicher Leistung und Oberflächentemperatur die aktive Fläche und damit der Edelmetall- und der Nafionbedarf etwa um 75% und das Volumen etwa um 60% verringert werden.

### Bezugszeichenliste

- 1: Brennstoffzellenstack
- 2: Gehäuse
- 2a: Lufteintrittsteil
- 2b: Luftaustrittsteil
- 3: Zuluftöffnung
- 4: Lüfter
- 5: Abluftöffnung
- 6: Luftverteiler
- 7: Abluftkühler
- 8: Kondenswasserablauföffnung
- 9: Wärmeisolierschicht
- 10: Ringspalt
- 11: Brennstoff-Wasser-Behälter
- 12: Brennstofftank
- 13: Vorlaufleitung
- 14: Wärmetauscher (Latentwärmespeicher)
- 15: Rücklaufleitung
- 16: Rückkühler
- 17: Brennstoffsensor
- 18: Steuerung
- 19: Gas-Auslassventil
- 20: Rohrleitung

## Patentansprüche

1. Brennstoffzellenstack für begrenzt wärmebelastbare Systeme, der in einem Abstand von einem Gehäuse (2) umgeben und zwischen Brennstoffzellenstack (1) und Gehäuse (2) ein Ringspalt (10) gebildet ist, der mit einem an eine Luftquelle angeschlossenen Lufteintrittsteil (2a) zur Zuführung von Arbeitsluft zum Brennstoffzellenstack (1) verbunden ist, und miteiner Wärmeisolierschicht (9), **dadurch gekennzeichnet, dass** die Wärmeisolierschicht (9) den Brennstoffzellenstack (1) ummantelt und der Ringspalt (10) zwischen der Wärmeisolierschicht (9) und dem Gehäuse (2) ausgebildet ist, dass das Lufteintrittsteil (2a) sowohl an den Brennstoffzellenstack (1) als auch zur Zuführung eines überschüssigen Zuluftteils an den Ringspalt (10) angeschlossen ist und dass das Lufteintrittsteil (2a) über den Ringspalt (10) mit einen Luftaustrittsteil (2b) verbunden ist, in das heiße Kathodenabluft und die über den Ringspalt (10) zugeführte Zusatzluft eintreten und in dem ein Abluftkühler (7) zur Kühlung der heißen Kathodenabluft mit der Zusatzluft angeordnet ist.

2. Stack nach Anspruch 1, **dadurch gekennzeichnet, dass** die Wärmeisolierschicht (9) aus einem Vakuumisoliermaterial besteht.

3. Stack nach Anspruch 1, **dadurch gekennzeichnet, dass** in dem Lufteintrittsteil (2a) ein Luftverteiler (6) zur gleichmäßig verteilten Luftzufuhr zum Brennstoffzellenstack (1) und zur Weiterleitung eines zur Kühlung dienenden größeren Teils der Zuluft über den Ringspalt (10) zum Abluftkühler (7) angeordnet ist.

4. Stack nach Anspruch 3, **dadurch gekennzeichnet, dass** der Luftverteiler (6) eine dem Stack vorgeschaltete Platte aus einem Sintermaterial oder Vliesmaterial ist.

5. Stack nach Anspruch 1, **dadurch gekennzeichnet, dass** der Abluftkühler (7) ein plattenförmiger Körper ist, der auf der einen Seite mit heißer, feuchter Kathodenabluft und auf der gegenüberliegenden Seite mit der zugeführten Kühlluft beaufschlagt ist.

6. Stack nach Anspruch 1, **dadurch gekennzeichnet, dass** in dem Luftaustrittsteil (2b) eine Kondenswasserablauföffnung (8) zur Ableitung von am Abluftkühler aus der heißen, feuchten Kathodenabluft auskondensierendem Wasser vorgesehen ist.

7. Stack nach Anspruch 1, **dadurch gekennzeichnet, dass** die diesem zugeordnete Brennstoffquelle ein Brennstofftank (12) mit nachgeschaltetem Brennstoff-Wasser-Behälter (11) ist, wobei in den Vor- und Rücklauf zur Vorwärmung des zugeführten Brennstoffs und zur Kühlung der zurückgeführten Reaktionsprodukte in den Brennstoff-Wasser-Behälter (11) ein Wärmetauscher (14) eingebunden ist.

8. Stack nach Anspruch 7, **dadurch gekennzeichnet, dass** der Wärmetauscher (14) als Latentwärmespeicher ausgebildet ist, dessen Latentwärmespeichermaterial einen geringfügig unterhalb der Arbeitstemperatur des Stacks liegenden Schmelzpunkt hat.

9. Stack nach Anspruch 8, **dadurch gekennzeichnet, dass** der Latentwärmespeicher in den Stack integriert ist.

10. Stack nach Anspruch 8, **dadurch gekennzeichnet, dass** in den Rücklauf zwischen Stack und Brennstoff-Wasser-Behälter (11) ein Rückkühler (16) zur weiteren Abkühlung der in den Brennstoff-Wasser-Behälter (11) geleiteten Reaktionsprodukte auf eine unter 50°C liegende Temperatur eingebunden ist.

11. Stack nach Anspruch 6, **dadurch gekennzeichnet, dass** die Kondenswasserablauföffnung (8) über eine Rohrleitung mit dem Brennstoff-Wasser-Behälter (11) verbunden ist.

12. Verfahren zum Betreiben von Brennstoffzellenstacks gemäß den Merkmalen des Anspruches 1, insbesondere eines mit Luft und Brennstoff betriebenen, nach außen wärmeisolierten, in einem Ringspalt am Gehäuse gekühlten Brennstoffzellenstacks, mit einer entsprechend der gewünschten Leistung entstehenden Arbeitstemperatur, **dadurch gekennzeichnet, dass** die aufgrund der Arbeitstemperaturen anfallende Wärmemenge mit der heißen Kathodenabluft über die durch den Ringspalt zugeführte, über den Luftbedarf der Brennstoffzelle hinausgehende überschüssige Zuluft abgeführt wird.

13. Verfahren nach Anspruch 12, **dadurch gekennzeichnet, dass** die Arbeitstemperatur zwischen 60°C und 110°C liegt.

14. Verfahren nach Anspruch 12, **dadurch gekennzeichnet, dass** die Arbeitstemperatur zwischen 65°C und 90°C liegt.

15. Verfahren nach Anspruch 12, **dadurch gekennzeichnet, dass** die Arbeitstemperatur zwischen 70°C und 80°C liegt.

16. Verfahren nach Anspruch 12, **dadurch gekennzeichnet, dass** mit einem überwiegenden Teil der zugeführten Luft die austretende heiße und feuchte Kathodenabluft unmittelbar durch Mischen oder mittelbar über einen Abluftkühler abgekühlt und dabei ein Wasseranteil auskondensiert wird.

17. Verfahren nach Anspruch 16, **dadurch gekennzeichnet, dass** das Kondenswasser gesammelt und in den Prozeß zurückgeführt wird.

18. Verfahren nach Anspruch 12, **dadurch gekennzeichnet, dass** der anodenseitig zugeführte Brennstoff ein Methanol-Wasser-Gemisch ist, wobei durch Wärmeaustausch der Brennstoff vorgewärmt und die anodenseitig austretenden Reaktionsprodukte gekühlt werden.

19. Verfahren nach Anspruch 18, **dadurch gekennzeichnet, dass** der Wärmeaustausch über ein Latentwärmespeichermaterial erfolgt, dessen Schmelzpunkt geringfügig unterhalb der Arbeitstemperatur des Brennstoffzellenstacks liegt.

## Claims

1. A fuel cell stack for systems having a limited thermal loading capacity, which is surrounded by a housing (2) at a distance and an annular gap (10) is formed between the fuel cell stack (1) and the housing (2), said gap being connected to an air inlet part (2a) which is connected to an air source for supplying working air to the fuel cell stack (1), and comprising a heat insulating layer (9), **characterised in that** the heat insulating layer (9) surrounds the fuel cell stack (1) and the annular gap (10) is formed between the heat insulating layer (9) and the housing (2), the air inlet part (2a) is connected to the fuel cell stack (1) and also to the annular gap (10) for supplying an excess portion of incoming air and the air inlet part (2a) is connected via the annular gap (10) to an air outlet part (2b) into which hot cathode waste air and the additional air supplied via the annular gap (10) enters and which contains a waste air cooler (7) for cooling the hot cathode waste air with the additional air.

2. The stack according to claim 1, **characterised in that** the heat insulating layer (9) consists of a vacuum insulating material.

3. The stack according to claim 1, **characterised in that** located in the air inlet part (2a) is an air distributor (6) for a uniformly distributed air supply to the fuel cell stack (1) and for transferring a larger portion of the incoming air used for cooling via the annular gap (10) to the waste air cooler (7).

4. The stack according to claim 3, **characterised in that** the air distributor (6) is a plate made of a sintered material or fleece material located upstream of the stack.

5. The stack according to claim 1, **characterised in that** the waste air cooler (7) is a plate-shaped body which is acted upon with hot moist cathode waste air on one side and with the supplied cooling air on the opposite side.

6. The stack according to claim 1, **characterised in that** a condensation drain opening (8) for removing water condensing out from the hot moist cathode waste air at the waste air cooler is provided in the air outlet part (2b).

7. The stack according to claim 1, **characterised in that** the fuel source allocated to said stack is a fuel tank (12) with a downstream fuel-water container (11) wherein a heat exchanger (14) is incorporated in the feed and return pipe for pre-heating the supplied fuel and for cooling the returned reaction products in the fuel-water container (11).

8. The stack according to claim 7**, characterised in that** the heat exchanger (14) is constructed as a latent heat storage device whose latent heat storage material has a melting point slightly below the operating temperature of the stack.

9. The stack according to claim 8, **characterised in that** the latent heat storage device is integrated in the stack.

10. The stack according to claim 8**, characterised in that** incorporated in the return pipe between the stack and the fuel-water container (11) is a recooler (16) for further cooling of the reaction products fed into the fuel-water container (11) to a temperature below 50°C.

11. The stack according to claim 6, **characterised in that** the condensation drain opening (8) is connected to the fuel-water container (11) via a pipeline.

12. A method for operating fuel cell stacks according to the features of claim 1, in particular a fuel cell stack operated with air and fuel, which is thermally insulated towards the exterior and is cooled in an annular gap at the housing and which has a working temperature corresponding to the desired power, **characterised in that** the amount of heat accumulating as a result of the operating temperatures is removed with the surplus incoming air which goes beyond the air requirement of the fuel cell and which is supplied to the hot cathode waste air via the annular gap.

13. The method according to claim 12, **characterised in that** the operating temperature is between 60°C and 110°C.

14. The method according to claim 12, **characterised in that** the operating temperature is between 65°C and 90°C.

15. The method according to claim 12, **characterised in that** the operating temperature is between 70°C and 80°C.

16. The method according to claim 12, **characterised in that** the emerging hot and moist cathode waste air is cooled with a dominant portion of the supplied air directly by mixing or indirectly via a waste air cooler and at the same time, a water fraction condenses out.

17. The method according to claim 16, **characterised in that** the condensation water is collected and returned to the process.

18. The method according to claim 12, **characterised in that** the fuel supplied on the anode side is a methanol-water mixture, wherein the fuel is pre-heated by heat exchange and the reaction products emerging on the anode side are cooled.

19. The method according to claim 18, **characterised in that** the heat exchange takes place via a latent heat storage material whose melting point is slightly below the operating temperature of the fuel cell stack.

## Revendications

1. Pile de cellules combustibles pour systèmes pouvant subir une charge thermique limitée, qui est entouré en un espacement par un logement (2) et une fente annulaire (10) est formée entre une pile de cellules combustibles (1) et le logement (2), laquelle est reliée à une partie d'entrée d'air (2a) raccordée à une source d'air pour introduire de l'air de travail dans la pile de cellules combustibles (1), et comportant une couche d'isolation thermique (9), **caractérisée en ce que** la couche d'isolation thermique (9) enrobe la pile de cellules combustibles (1) et la fente annulaire (10) est réalisée entre la couche d'isolation thermique (9) et le logement (2), **en ce que** la partie d'entrée d'air (2a) est raccordée tant à la pile de cellules combustibles (1) que, également à des fins d'introduction d'une partie d'air d'amenée superflue, à la fente annulaire (10) et **en ce que** la partie d'entrée d'air (2a) est reliée par l'intermédiaire de la fente annulaire (10) à une partie de sortie d'air (2b), dans laquelle pénètrent de l'air rejeté de cathode et l'air supplémentaire introduit via la fente annulaire (10) et dans laquelle un refroidisseur d'air rejeté (7) est disposé à des fins de refroidissement de l'air rejeté de cathode chaud avec l'air supplémentaire.

2. Pile selon la revendication 1, **caractérisée en ce que** la couche d'isolation thermique (9) est constituée d'une couche de matériau isolant contre le vide.

3. Pile selon la revendication 1, **caractérisée en ce que** dans la partie d'entrée d'air (2a) un répartiteur d'air (6) est disposé à des fins d'introduction d'air dans la pile de cellules combustibles (1) de manière uniformément répartie et de transfert d'une partie plus grande de l'air introduit via la fente annulaire (10) vers le refroidisseur d'air rejeté (7) servant au refroidissement.

4. Pile selon la revendication 3, **caractérisée en ce que** le répartiteur d'air (6) est une plaque en un matériau d'aggloméré ou un matériau d'étoffe non tissée disposée en amont de la pile.

5. Pile selon la revendication 1, **caractérisée en ce que** le refroidisseur d'air rejeté (7)est un corps en forme de plaque, qui est sollicité sur un de ses côtés par de l'air rejeté de cathode humide et chaud et sur le côté opposé par l'air de refroidissement introduit.

6. Pile selon la revendication 1, **caractérisée en ce que** dans la partie de sortie d'air (2a) une ouverture d'évacuation d'eau condensée (8) pour évacuer l'eau se condensant sur le refroidisseur d'air rejeté à partir de l'air rejeté de cathode humide et chaud est prévue.

7. Pile selon la revendication 1, **caractérisée en ce que** le source de combustible coordonnée à celle-ci est un réservoir de combustible (12) comportant un récipient eau- combustible (11) disposé en aval, dans laquelle dans le parcours aller et le parcours retour à des fins de préchauffage du combustible introduit et de refroidissement des produits de réaction réintroduits dans le récipient eau - combustible (11), un échangeur de chaleur (14) est intégré.

8. Pile selon la revendication 7, **caractérisé en ce que** l'échangeur de chaleur (14) est réalisé comme un accumulateur de chaleur latente, dont le matériau d'accumulation de chaleur latente possède un point de fusion situé légèrement en dessous de la température de travail de la pile.

9. Pile selon la revendication 8, **caractérisée en ce que** l'accumulateur de chaleur latente est intégré à la pile.

10. Pile selon la revendication 8, **caractérisée en ce que** dans la parcours retour entre la pile et le récipient eau- combustible (11), un refroidisseur par retour (16) afin de poursuivre le refroidissement des produits de réaction guidés dans le récipient eau-combustible est intégré à une température située en dessous de 50°C.

11. Pile selon la revendication 6**, caractérisée en ce que** l'ouverture d'évacuation d'eau condensée (8) est reliée par l'intermédiaire d'une conduite tubulaire au récipient eau- combustible (11).

12. Procédé d'exploitation d'une pile de cellules combustibles selon les caractéristiques de la revendication 1, notamment d'une pile de cellules combustibles exploitée avec de l'air et du combustible, isolée thermiquement par rapport à l'extérieur, refroidie dans une fente annulaire sur le logement, avec une température de travail générant de manière correspondante la puissance souhaitée, **caractérisé en ce que** la quantité de chaleur présente en raison des températures de travail est évacuée avec l'air rejeté de cathode chaud par l'intermédiaire de l'air d'amenée superflu introduit à travers la fente annulaire, ressortant en fonction du besoin en air des cellules combustibles.

13. Procédé selon la revendication 12, **caractérisé en ce que** la température de travail est comprise entre 60°C et 110°C.

14. Procédé selon la revendication 12, **caractérisé en ce que** la température de travail est comprise entre 65°C et 90°C.

15. Procédé selon la revendication 12, **caractérisé en ce que** la température de travail est comprise entre 70°C et 80°C.

16. Procédé selon la revendication 12, **caractérisé en ce que** avec une partie prépondérante de l'air introduit, l'air rejeté de cathode chaud et humide ressortant est refroidi directement par mélange ou indirectement par l'intermédiaire d'un refroidisseur d'air rejeté et ainsi une fraction d'eau est condensée.

17. Procédé selon la revendication 16, **caractérisé en ce que** l'eau condensée est collectée et réintroduite dans le processus

18. Procédé selon la revendication 12, **caractérisé en ce que** le combustible introduit du côté de l'anode est un mélange eau - méthanol, dans lequel par échange thermique le combustible est préchauffé et les produits de réaction ressortant du côté de l'anode sont refroidis.

19. Procédé selon la revendication 18, **caractérisé en ce que** l'échange thermique se fait par l'intermédiaire d'un matériau d'accumulation de chaleur latente, dont le point de fusion est situé légèrement en dessous de la température de travail de la pile de cellules combustibles.
